# EUROPÄISCHE PATENTANMELDUNG

(11) **EP 1 059 338 A2**
(43) Veröffentlichungstag der Anmeldung: **13.12.2000**
(21) Anmeldenummer: 00111231.7
(22) Anmeldetag: 25.05.2000
(51) Int. Cl.: C09D 5/36

(54) **Mittel zur Beschichtung von transparenten Flächen**

(30) Priorität: 08.06.1999 DE 19925955
(71) Anmelder: MERCK PATENT GmbH, 64293 Darmstadt (DE)
(72) Erfinder: Schmidt, Christoph, Dr., 65830 Kriftel (DE); Rosenberger, Silvia, 63329 Egelsbach (DE); Weigand, Manfred, Dr., 64342 Seeheim-Jugenheim (DE)

(57) **Zusammenfassung**

Mittel zur Beschichtung transparenter Flächen enthaltend
a) ein mehrschichtiges Interferenzpigment, bestehend aus einem transparenten Trägermaterial, das mit alternierenden Schichten aus einem Material mit niedriger Brechzahl und einem Material mit hoher Brechzahl beschichtet ist, wobei die Differenz der Brechzahlen mindestens 0,1 beträgt und
b) mindestens ein polymeres, organisches Bindemittel.

## Beschreibung

Die vorliegende Erfindung betrifft ein Mittel zur Beschichtung transparenter Flächen, wie sie beispielsweise für Gewächshäuser, Folienbauten, Lichtkuppeln, Dachfenster oder Dachabdeckungen verwendet werden, das im sichtbaren Bereich des Sonnenlichtes eine hohe Durchlässigkeit und im NIR-Bereich eine hohe Reflexion besitzt.

Um zu hohe Temperaturen im umschlossenen Raum zu vermeiden und das einfallende Sonnenlicht zu streuen, finden gegenwärtig Schattierfarben Verwendung, die aus einem oder mehreren Weißpigmenten und einem polymeren Bindemittelsystem bestehen. Diese Schattierfarben werden in Perioden intensiver Sonneneinstrahlung durch Spritzen, Rollen oder Streichen auf die zu beschichtenden Fläche aufgetragen und im Winter durch Abwaschen wieder entfernt.

EP-A-428937 beschreibt eine grau-weiße Schattierfarbe für Gewächshäuser, die aus einem flüssigen Bindemittel und darin suspendierten reflektierenden Partikeln besteht. Diese Partikel sind Aluminiumplättchen oder mit Titandioxid beschichtete Glimmerplättchen. Die Schattierfarbe wird für temporäre Beschichtungen in Perioden intensiver Sonneneinstrahlung auf die zu beschichtenden Flächen durch Spritzen, Streichen oder Rollen aufgetragen und im Winter durch Abwaschen mit einem Wasserstrahl entfernt.

Im Handel sind Schattierfarben unter der Bezeichnung "Nixol" von der Firma Farball, Holland, und unter der Bezeichnung "Redusol Xtra" von der Firma Mardenho, Holland, erhältlich.

Die genannten Schattierfarben streuen das einfallende Licht und verhindern ein 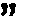 Verbrennen" der Pflanzen. Sie bewirken auch durch Absorption und Reflexion des einfallenden Lichtes eine Absenkung der Temperatur im umschlossenen Raum. Sie haben aber den Nachteil, daß durch die Reduzierung der durchgehenden Lichtmenge der Raum verdunkelt und die für die Pflanze photosynthetisch nutzbare Strahlung (PAR) reduziert wird. Das Verhältnis von Lichttransmissionsgrad zu solarem Transmissiongrad ist 1 oder sogar kleiner als 1.

EP 0 548 822 beschreibt einen lichtdurchlässigen IR-reflektierenden Körper, der aus einem Basismaterial aus Kunststoff und einer darauf haftenden Überzugsschicht besteht. Die Überzugsschicht enthält 20 bis 40 Gew.-% eines einschichtigen Interferenzpigmentes. Nachteilig bei diesem Körper ist, daß neben der NIR-Strahlung auch ein erheblicher Teil des sichtbaren Lichtes reflektiert wird und daß das hindurchtretende Licht grün und das reflektierte Licht rot ist.

Aufgabe der vorliegenden Erfindung ist es daher, ein Mittel zur Beschichtung von transparenten Flächen bereitzustellen, das im sichtbaren Bereich des Lichtes eine hohe Durchlässigkeit und im NIR-Bereich eine hohe Reflexion besitzt und bei dem das Verhältnis von Lichttransmissionsgrad zu solarem Transmissionsgrad größer als 1 ist.

Diese Aufgabe wird gemäß der Erfindung gelöst durch ein Mittel zur Beschichtung von transparenten Flächen enthaltend
a) ein mehrschichtiges Interferenzpigment, bestehend aus einem transparenten Trägermaterial, das mit alternierenden Schichten von Materialien mit niedriger und hoher Brechzahl beschichtet ist, wobei die Differenz der Brechzahlen mindestens 0,1 beträgt und
b) mindestens ein polymeres organisches Bindemittel.

Das erfindungsgemäße Mittel enthält noch weitere Bestandteile, wie sie aus der Beschichtungstechnologie bekannt sind. Darunter sind Verdickungsmittel, Dispergierhilfsmittel, Netzmittel und Plastifizierungsmittel zu verstehen.

Das in dem erfindungsgemäßen Mittel enthaltene mehrschichtige Interferenzpigment hat gegenüber den in bekannten Schattierfarben enthaltenen Weißpigmenten, wie Titandioxid, Calciumcarbonat, Bariumsulfat, Magnesiumoxid, deutliche Vorteile. Das Pigment besitzt im Bereich des sichtbaren Lichtes und der photosynthetisch aktiven Strahlung (PAR) eine deutlich höhere Durchlässigkeit und bewirkt neben der Reflexion der NIR-Strahlung auch eine Streuung des einfallenden Lichtes. Das Verhältnis von Lichttransmissionsgrad zu solarem Transmissionsgrad ist größer als 1. Lichttransmissionsgrad und solarer Transmissionsgrad sind in DIN EN 410 näher definiert.

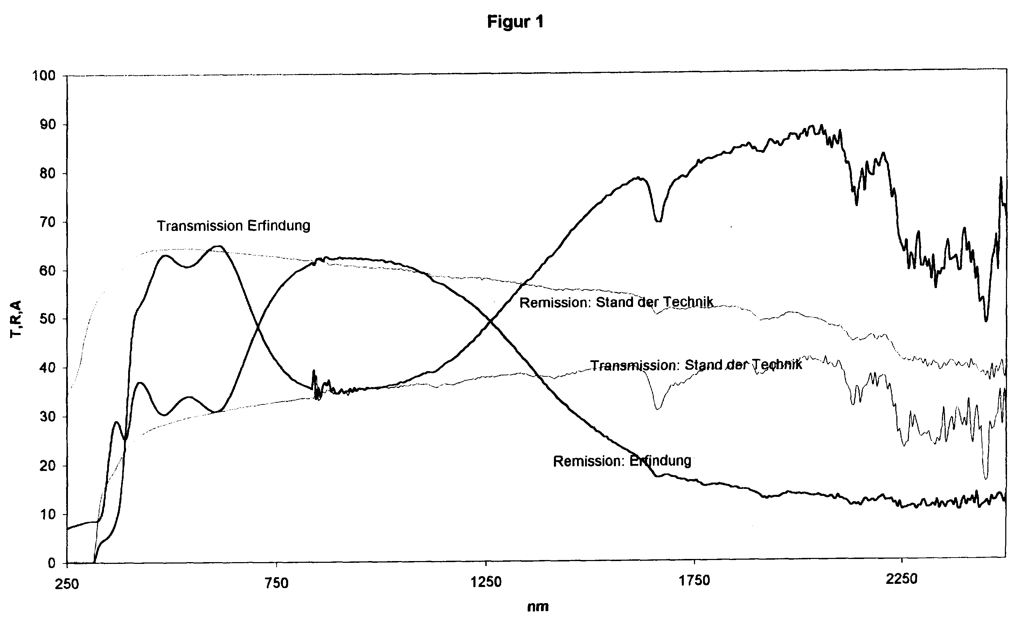

In Figur 1 sind Transmission und Remission des erfindungsgemäßen Mittels im Vergleich zu einer im Handel erhältlichen Schattierfarbe (Nixol) dargestellt. Auf Glasplatten wurde jeweils ein 100 µm dicker Film aufgetragen. Die Pigmentkonzentration im erfindungsgemäßen Mittel betrug 10 %. Die Transmission des erfindungsgemäßen Mittels beträgt im PAR-Bereich etwa 75 %. Die Transmissionskurve fällt dann zum NIR-Bereich hin steil ab, weil möglichst viel Wärmestrahlung reflektiert werden soll. Dagegen beträgt die Transmission der bekannten Schattierfarbe im PAR-Bereich nur 25 %. Das bedeutet, daß im umschlossenen Raum der Pflanze viel weniger verwertbares Licht zur Verfügung steht und das Wachstum entsprechend gehemmt wird. Die Remissionskurven zeigen, daß bei nahezu gleicher Remission im NIR-Bereich das erfindungsgemäße Mittel im Vergleich zur Schattierfarbe eine mehr als zweimal höhere Transmission im PAR-Bereich besitzt.

Das mehrschichtige Interferenzpigment besteht aus einem transparenten, plättchenförmigen Trägermaterial. Dieses Trägermaterial kann natürlicher oder synthetischer Glimmer, ein anderes Schichtsilikat, Glasplättchen, plättchenförmiges Siliciumdioxid oder Aluminiumoxid sein.

Auf das Trägermaterial sind im allgemeinen 3 Schichten aufgetragen. Die erste Schicht besteht aus einem Material mit hoher Brechzahl, das TiO₂, ZrO₂, Fe₂O₃, Fe₃O₄, Cr₂O₃, ZnO oder ein Gemisch aus diesen Oxiden sein kann. Die zweite Schicht besteht aus einem Material mit niedriger Brechzahl, beispielsweise SiO₂ oder Al₂O₃. Die dritte Schicht besteht wiederum aus einem Material mit hoher Brechzahl. Auf dieses Schichtpaket kann wahlweise noch eine Schutzschicht aufgebracht sein. Die Herstellung des Pigmentes und seine Eigenschaften sind in DE 196 18 569 näher beschrieben.

Das mehrschichtige Interferenzpigment ist in Konzentrationen von 1 bis 30 Gew.%, bevorzugt 3 bis 15 Gew.%, im erfindungsgemäßen Mittel enthalten.

Als Bindemittel für das erfindungsgemäße Mittel werden Polymere und Copolymere eingesetzt, die aus der Beschichtungstechnologie bekannt sind. Geeignet sind Alkydharze, Vinylharze, Epoxidharze, Polyurethane, Acrylate, chlorierter Kautschuk, Polycarbonate, Polyester, Polyethylenglykol und ihre Copolymere. Die Konzentration des Bindemittels in der Schattierfarbe beträgt 5 bis 60 Gew.-%, bevorzugt 10 bis 30 Gew.-%. Das erfindungsgemäße Mittel kann an den jeweiligen Untergrund angepaßt werden. Um eine bessere Haftung auf Glas zu erreichen, werden zum Beispiel 5 Gew.-% einer Acrylpolymer-Dispersion eingesetzt.

Neben den beiden Hauptkomponenten enthält das erfindungsgemäße Mittel noch weitere Zusätze, wie sie aus der Beschichtungstechnologie bekannt sind. Darunter sind Verdickungsmittel, Dispergierhilfsmittel, Netzmittel und Plastifizierungsmittel sowie Lösemittel, wie Wasser, Ester, Ketone, Alkohole oder Aromaten, zu verstehen.

Um die Streuung des Lichtes zu erhöhen, können dem erfindungsgemäßen Mittel weitere Zusatzstoffe, wie Calcium-, Magnesium-, Barium- und Zinkcarbonat, Magnesiumoxid, Bariumsulfat oder Bortrioxid in einer Konzentration von 1 bis 20 Gew.% zugesetzt werden.

Das erfindungsgemäße Mittel wird in einer Schichtdicke von 20 bis 200 µm, bevorzugt 50 bis 100 µm, auf die zu beschichtenden Flächen durch bekannte Verfahren, wie Spritzen, Streichen, Rollen oder Gießen aufgebracht. Bei den zu beschichtenden Flächen handelt es sich um Glas, Verglasungsmaterial aus Kunststoffen, beispielsweise Polymethyl-methacrylat, Polycarbonat, Polystyrol oder Styrol-Acrylnitril-Copolymerisat oder um Polymerfolien, wie zum Beispiel Gewächshausfolien. Das erfindungsgemäße Mittel kann, wie oben ausgeführt, an den jeweiligen Untergrund angepaßt werden.

In einer besonderen Ausführungsform liegt das polymere organische Bindemittel in Form einer wäßrigen Emulsion vor. Es ist dadurch für eine temporäre Beschichtung der transparenten Flächen geeignet. In Perioden intensiver Sonneneinstrahlung kann es durch Spritzen, Streichen, Rollen oder Gießen aufgetragen werden und dann in Perioden mit geringer Sonneneinstrahlung mit Hilfe eines Wasserstrahls, eventuell mit mechanischer und/oder chemischer Unterstützung, wieder entfernt werden.

Das folgende Beispiel soll die Erfindung näher erläutern, ohne sie zu begrenzen.

### Beispiel

Ein erfindungsgemäßes Mittel bestehend aus

| | |
|---|---|
| Bindemittel, Acrylpolymer-Dispersion (Neocryl®) | 5 % |
| mehrschichtiges Interferenzpigment (AC 870, Hersteller: Merck KGaA) | 10 % |
| Plastifizierungsmittel (PEG 3000) | 5 % |
| Dispergierhilfsmittel (Rohagid SL-606) | 3 % |
| Netzmittel (BYK-348) | 1 % |
| Verdickungsmittel (Xanthan) | 0,3 % |
| Wasser | 75,7 % |

wird durch Sprühen auf eine Glasplatte in einer Schichtdicke von 100 µm aufgetragen. Transmission und Remission der aufgetragenen Schicht sind in Figur 1 dargestellt.

### Vergleichsbeispiel

Eine im Handel erhältliche Schattierfarbe, Nixol® von Farball/Niederlande, wird mit einer Schichtdicke von 100 µm auf eine Glasplatte aufgetragen. Transmission und Remission der aufgetragenen Schicht sind in Figur 1 dargestellt.

**Tabelle**

| Lichttransmissionsgrad/Solarer Transmissionsgrad nach DIN EN 410 | | |
|---|---|---|
| | Beispiel | Vergleichsbeispiel |
| Lichttransmissionsgrad | 63 % | 48 % |
| solarer Transmissionsgrad | 49 % | 50 % |
| Solarfaktor | 1,28 | 0,95 |

Als Solarfaktor wird der Quotient aus Lichttransmissionsgrad und solarem Transmissionsgrad bezeichnet.

## Patentansprüche

1. Mittel zur Beschichtung transparenter Flächen enthaltend
a) ein mehrschichtiges Interferenzpigment, bestehend aus einem transparenten Trägermaterial, das mit alternierenden Schichten aus einem Material mit niedriger Brechzahl und einem Material mit hoher Brechzahl beschichtet ist, wobei die Differenz der Brechzahlen mindestens 0,1 beträgt und
b) mindestens ein polymeres, organisches Bindemittel.

2. Mittel nach Anspruch 1, dadurch gekennzeichnet, daß das mehrschichtige Interferenzpigment in einer Konzentration von 1 bis 30 Gew.-%, bezogen auf das Mittel, enthalten ist.

3. Mittel nach Anspruch 1 oder 2, dadurch gekennzeichnet, daß das Bindemittel ein Alkydharz, Vinylharz, Epoxidharz, Polyurethan, Acrylat, chlorierter Kautschuk, Polycarbonat, Polyester, Polyethylenglykol oder ein Copolymer derselben ist.

4. Mittel nach mindestens einem der Ansprüche 1 bis 3, dadurch gekennzeichnet, daß das Bindemittel in einer Konzentration von 5 bis 60 Gew.-% enthalten ist.

5. Mittel nach mindestens einem der Ansprüche 1 bis 4, dadurch gekennzeichnet, daß das Bindemittel in Form einer wäßrigen Emulsion vorliegt.

6. Transparente Flächen, beschichtet mit einem Mittel gemäß den Ansprüchen 1 bis 5.
